## Europäisches Patentamt

## European Patent Office

## Office européen des brevets

(19)

(11) Veröffentlichungsnummer: **0 124 776**

**A1**

(12)

# EUROPÄISCHE PATENTANMELDUNG

(21) Anmeldenummer: 84103769.0

(22) Anmeldetag: 05.04.84

(51) Int. Cl.³: **F 16 B 17/00**

(30) Priorität: 07.04.83 AT 1217/83

(43) Veröffentlichungstag der Anmeldung:
14.11.84 Patentblatt 84/46

(84) Benannte Vertragsstaaten:
CH DE FR GB IT LI NL

(71) Anmelder: Lex, Franz
Annenstrasse 6
A-8020 Graz(AT)

(72) Erfinder: Lex, Franz
Annenstrasse 6
A-8020 Graz(AT)

(54) Schnappkupplung, insbesondere für Geräte mit Schwingungsantrieb, z. B. Massageapparate.

(57) Bei der vorliegenden erfindungsgemäßen Schnappkupplung ist der mit dem Werkzeug (7) verbundene, aus elastischem oder federndem Material bestehende Kupplungsbolzen (8) am Ende mit einem umlaufenden Wulst (12) ausgebildet, dessen Außendurchmesser größer als jener der Bohrung (9) im Werkzeugträger ist, wobei das den Wulst (12) aufweisende Ende des Kupplungsbolzens (8) einen achsialen Schlitz (13) aufweist, durch den dieser beim Kuppeln zusammendrückbar ist und im gekuppelten Zustand, bei welchem der Wulst (12) knapp aus der Bohrung (9) ragt, seine ursprüngliche Form annimmt und damit als Verriegelung wirkt.

Der Kupplungsbolzen (8) ist an der Übergangsstelle zum Werkzeug (7) vorzugsweise mit einem Ansatz (10) ausgebildet, dessen Querschnitt vorzugsweise sechskantig und größer als jener des Wulstes (12) ist, sodaß ein mit nur einem Kupplungsbolzen (8) versehenes Werkzeug (7) auch gegen Verdrehung gesichert am Werkzeugträger (5) eingesetzt werden kann.

Der bzw. die Kupplungsbolzen (8) ist (sind) einstückig mit dem Werkzeug (7) gefertigt und bestehen aus einem Kunststoffpreßteil.

FIG. 5

EP 0 124 776 A1

- 1 -

## Schnappkupplung

Die Erfindung betrifft eine Schnappkupplung, insbesondere für Geräte für Schwingungsantrieb, z. B. Massageapparate, mit zumindest einem mit dem Werkzeug verbundenen Kupplungsbolzen, welcher am Ende einer im Werkzeugträger angeordneten Bohrung durch eine federnde Verriegelung an diesem haltbar ist und gegebenenfalls mit Mitnehmerlappen, einem Ansatz od. dgl. in der Bohrung bzw. in eine Ausnehmung des Werkzeugträgers antriebsübertragend einrastet.

Zur Befestigung eines Werkzeuges an einem rotierend angetriebenen Werkzeugträger werden neben Schaftkupplungen u. a. auch bolzenartige Steckkupplungen verwendet, die mittels eines Mitnehmers am Werkzeugträger einrasten und an diesem durch eine in eine Nut des Bolzens eingreifende, im Werkzeugträger angeordnete federnde Verriegelung haltbar sind. Die Nachgiebigkeit der federnden Verriegelung, z. B. einer im Werkzeugträger angeordeten Federspange, gewährleistet aber keine verläßliche Sicherung des Werkzeuges gegen eine achsiale Verschiebung, sodaß Kupplungen dieser Art bei schwingend oder vibrierend angetriebenen Werkzeugen wegen der Gefahr, daß die gekuppelten Teile im Rhythmus der Schwingungen ständig aufeinander treffen, kaum geeignet sind.

Bei einem bekannten Massagegerät (OE - PS 246 912) erfolgt daher, um diesen Nachteil zu vermeiden, die Befestigung des Werkzeuges durch Verschraubung, wobei es aber vielfach vorkommen kann, daß der am Werkzeug angeordnete Gewindebolzen bzw. das am Werkzeugträger angeordnete Gewinde bei unsachgemässer Anbringung sich verklemmt und so eine weitere Befestigung desselben erschwert.

Nachteile dieser Art werden bei einem anderen schwingend angetriebenen Massagegerät (OE - PS 238 881) insoferne beseitigt, als bei diesem das Werkzeug zwei gegenüberliegende Kupplungsbolzen aufweist, die in annähernd übereinstimmende am Werkzeugträger angeordnete Bohrungen einrasten und an diesem durch außerhalb des Motorgehäuses angeordnete, in Einschnürungen der Bolzen

0124776

einschiebbare Spreizfedern haltbar sind. Die mechanische Verriegelung ge-währleistet zwar eine sichere Verbindung des Werkzeuges mit dem Werkzeugträger, ist aber andererseits sehr aufwendig und auch umständlich. Außerdem erfordern die verschiebbaren Spreizfedern einen weit über das Motorgehäuse reichenden Werkzeugträger, sodaß die genannte Kupplung nur bei Geräten mit einem großflächigen Werkzeug angewendet werden kann.

Diese Nachteile werden gemäß dieser Erfindung dadurch beseitigt, daß der aus elastischem oder federndem Material bestehende Kupplungsbolzen mit einem umlaufenden Wulst endet, dessen Außendurchmesser größer als jener der Bohrung im Werkzeugträger ist, und daß das den Wulst aufweisende Ende des Kupplungsbolzens einen achsialen Schlitz aufweist, durch den der Kupplungsbolzen beim Kuppeln zusammendrückbar ist. Damit übernimmt der Kupplungsbolzen, welcher nach dem Kuppeln mit dem Wulst aus der im Werkzeugträger angeordneten Bohrung ragt und durch seine Elastizität die natürliche Form annimmt, selbsttätig die Verriegelung und es können damit auch Werkzeuge mit kleineren Arbeitsflächen innerhalb des Motorgehäuseumfanges achsial gesichert angeordnet werden.

In Weiterbildung der Erfindung kann vorgesehen sein, daß der Wulst halbkreisförmigen Querschnitts oder an seinem dem Kupplungsbolzen zu- bzw. abgewandten Seiten abgeschrägt ist. Die abgerundeten bzw. abgeschrägten Seiten des Kupplungsbolzens erleichtern das Ein- und Auskuppeln des Werkzeuges, wobei das Werkzeug im gekuppelten Zustand,dadurch daß der Wulst im Werkzeugträger einrastet, an den Werkzeugträger gedrückt wird und damit auch stärkeren Vibrationen standhält.

Das Ein- und Auskuppeln wird besonders erleichtert, wenn gemäß einer anderen Weiterbildung der Erfindung der Schlitz bis etwa an den Mitnehmerlappen, Ansatz od. dgl. des Kupplungsbolzens bzw. bis an dessen Übergangsstelle zum Werkzeug reicht und vorzugsweise mit einer Rundung endet und sich konisch in Richtung des Wulstes erweitert.

Von Vorteil ist es auch, wenn gemäß einer Fortbildung der Erfindung der Ansatz des Kupplungsbolzens einen größeren Querschnitt aufweist, als der am Ende desselben angeordnete Wulst. Dies erfordert im Werkzeugträger zwar eine zusätzliche Ausnehmung, erleichtert aber andererseits das Einführen des Kupplungsbolzens und erhöht dessen Festigkeit an der Übergangsstelle zum Werkzeug.

Besonders zweckmäßig ist es, wenn dabei die im Werkzeugträger angeordnete Ausnehmung und der in diese einrastende Ansatz des Kupplungsbolzens einen von der Kreisform abweichenden Querschnitt aufweisen und z. B. sechskantig ausgebildet sind. Damit kann man nicht nur eine gewünschte Richtung des einsetzbaren Werkzeuges festlegen, sondern dieses außerdem auch gegen eine Verdrehung gesichert im Werkzeugträger anordnen. Letzteres ist auch dann vorteilhaft, wenn anstelle eines größeren, mit mehreren Kupplungsbolzen ausgebildeten Werkzeuges, ein kleineres Werkzeug an einer der Bohrungen des Werkzeugträgers angeordnet wird, das nur mit einem Kupplungsbolzen ausgebildet ist.

In weiterer Ausgestaltung der Erfindung kann auch vorgesehen sein, daß der bzw. mehrere Kupplungsbolzen mit dem Werkzeug einstückig gefertigt ist (sind) und aus einem Kunststoffpreßteil bestehen. Bei der bekannten Ausbildung dieser Art (OE – PS 238 881) ist dies insoferne nicht möglich, da bei dieser die dort verwendete Federspange ständig an der gleichen eingeschnürten Stelle des Kupplungsbolzens einwirkt. Ein aus Kunststoff bestehender, durch die Einschnürung an sich schon geschwächter Bolzen würde sich nämlich schon nach kürzerer Betriebsdauer an dieser Stelle abnützen und daher zum Bruch führen. Mit der erfindungsgemäßen Schnappkupplung wird auch dieser Nachteil beseitigt.

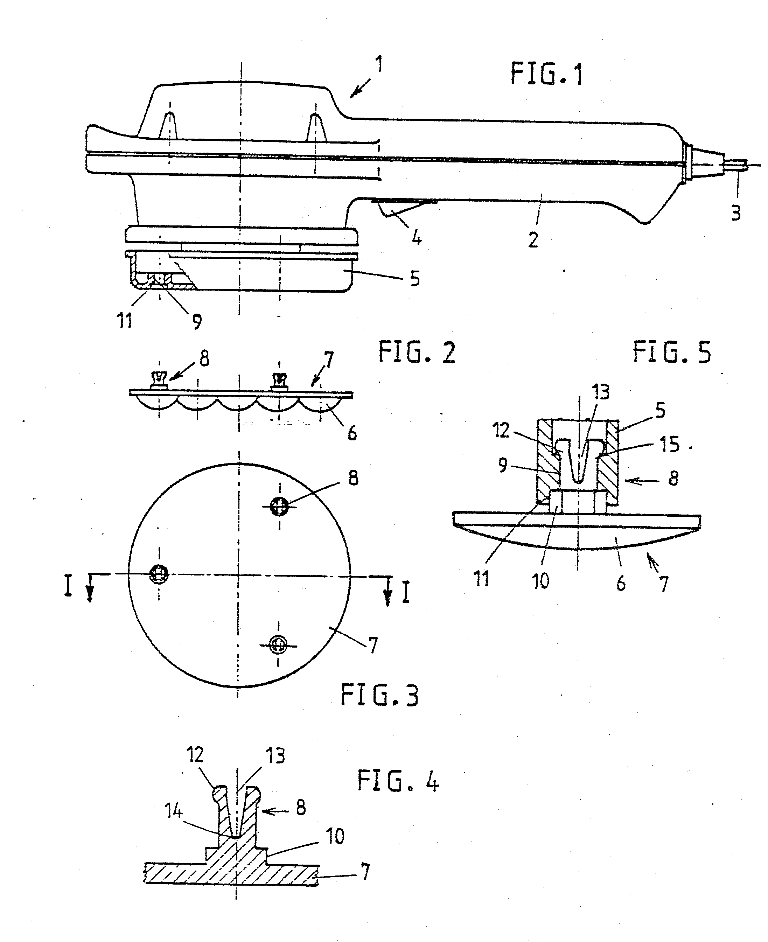

Die Erfindung wird anhand eines Ausführungsbeispieles näher erläutert: Es zeigen Fig. 1 in Ansicht ein Massagegerät, an dem das in Fig. 2 in Ansicht und in Fig. 3 in Draufsicht dargestellte Werkzeug 7 erfindungsgemäß angeordnet wird. Die Fig. 4 zeigt einen Querschnitt des erfindungsgemäßen Kupplungsbolzens nach den Linien I – I in Fig. 3 und Fig. 5 alternativ die Anordnung eines Werkzeuges mit nur einem Kupplungsbolzen an einem Teil eines im Querschnitt dargestellten Werkzeugträgers, letztere im vergrößerten Maßstab.

Bei dem in Fig. 1 beispielsweise dargestellten Massagegerät ist der Werkzeugträger 5 von dem im Gehäuse 1 angeordneten, nicht näher dargestellten Antriebssystem schwingend angetrieben, das seinerseits von dem am Handgriff 2 angeordneten Schalter 4 betätigt wird und durch das Stromkabel 3 mit einer Stromquelle verbunden ist. An der Unterseite und nahe der äußeren Mantellinie des napfförmig ausgebildeten Werkzeugträgers 5 sind drei Bohrungen 9 vorgesehen, die um genau 120° versetzt und auch vom Mittelpunkt gleich weit entfernt sind. Das an der Arbeitsfläche mit noppenförmigen Ansätzen 6 versehene Werkzeug 7 (Fig. 2 u. 3) weist an der dem Werkzeugträger 5 zugewandten Seite drei Kupplungsbolzen 8 auf, deren Anordnung genau mit den Bohrungen 9 im Werkzeugträger 5 übereinstimmen.
Ein in Fig. 4 in vergrößertem Maßstab und im Querschnitt dargestellter Kupplungsbolzen 8 besteht aus einem elastischen oder federnden Material und endet mit einem umlaufenden Wulst 12, dessen Außendurchmesser größer als jener der Bohrung 9 im Werkzeugträger 5 ist, wobei das Ende des Kupplungsbolzens 8 einen achsialen Schlitz 13 aufweist, durch den der Kupplungsbolzen 8 beim Kuppeln zusammendrückbar ist. Um das Ein- und Auskuppeln zu erleichtern, ist der Wulst 12 halbkreisförmigen Querschnitts oder an seinem dem Kupplungsbolzen 8 zu- bzw. abgewandten Seiten abgeschrägt. Der Schlitz 13 reicht etwa bis zu einem am Werkzeug 7 anschließenden Ansatz 10, endet mit einer Rundung 14 und erweitert sich konisch in Richtung des Wulstes 12. Der Ansatz 10, dessen Querschnitt größer als jener des Wulstes 12 ist, rastet beim Kuppeln in die zusätzliche Ausnehmung 11 des Werkzeugträgers 5 ein und überträgt damit die Antriebsbewegung vom Werkzeugträger 5 auf das Werkzeug 7.

In Fig. 5 ist das Werkzeug 7 nur mit einem Kupplungsbolzen 8 versehen. Der Ansatz 10 des Kupplungsbolzens 8 und die im Werkzeugträger 5 angeordnete Ausnehmung 11 sind sechskantig ausgebildet und weisen daher gegenüber den in Fig. 2 und 4 dargestellten Ausführungsbeispielen einen von der Kreisform abweichenden Querschnitt auf.

Die Erfindung beschränkt sich keineswegs auf die dargestellten Ausführungsbeispiele. So kann beispielsweise vorgesehen sein, daß auch mehrere mit einem sechskantigen Ansatz 10 versehene Kupplungsbolzen 8 in derselben Weise wie in Fig. 2 u. 3 am Werkzeugträger 5 angeordnet sein können, wenn dabei die im Werkzeugträger 5 befindlichen Ausnehmungen 11 ebenfalls sechskantig ausgebildet sind. Eine Kombination der Erfindung kann beispielsweise auch darin bestehen, daß am Werkzeugträger 5 zwei Ausnehmungen 11 kreisförmig und eine sechskantig ausgebildet sind bzw. ist. Auch sind im Rahmen der Erfindung Ausbildungen möglich, bei welchen der Kupplungsbolzen 8 ausschließlich nur zum Kuppeln dient, wobei zumindest ein Mitnehmerlappen, Ansatz 10 od. dgl. vom Kupplungsbolzen 8 getrennt am Werkzeug 7 angeordnet ist, der in eine übereinstimmende Ausnehmung 11 des Werkzeugträgers 5 antriebsübertragend einrastet.

0124776

Patentansprüche:

1.) Schnappkupplung, insbesondere für Geräte mit Schwingungsantrieb, z.B. Massageapparate, mit zumindest einem mit dem Werkzeug (7) verbundenen Kupplungsbolzen (8), welcher am Ende einer im Werkzeugträger (5) angeordneten Bohrung (9) durch eine federnde Verriegelung an diesem haltbar ist und gegebenenfalls mit Mitnehmerlappen, einem Ansatz(10) od. dgl. in der Bohrung (9) bzw. in eine Ausnehmung (11) des Werkzeugträgers (5) antriebsübertragend einrastet, d a d u r c h   g e k e n n z e i c h n e t , daß der aus elastischem oder federndem Material bestehende Kupplungsbolzen (8) mit einem umlaufenden Wulst (12) endet, dessen Außendurchmesser größer als jener der Bohrung (9) im Werkzeugträger (5) ist, und daß das den Wulst (12) aufweisende Ende des Kupplungsbolzens (8) einen achsialen Schlitz (13) aufweist, durch den Kupplungsbolzen (8) beim Kuppeln zusammendrückbar ist.

2.) Schnappkupplung nach Anspruch 1, dadurch gekennzeichnet, daß der Wulst (12) halbkreisförmigen Querschnitts oder an seinen dem Kupplungsbolzen (8) zu- bzw. abgewandten Seiten abgeschrägt ist.

3.) Schnappkupplung nach Anspruch 1 oder 2, dadurch gekennzeichnet, daß der Schlitz (13) bis etwa an den Mitnehmerlappen, Ansatz (10) od. dgl. des Kupplungsbolzens (8) bzw. bis an dessen Übergangsstelle zum Werkzeug (7) reicht und vorzugsweise mit einer Rundung (14) endet und sich konisch in Richtung des Wulstes (12) erweitert.

4.) Schnappkupplung nach einem der Ansprüche 1 bis 3, dadurch gekennzeichnet, daß der Ansatz (10) des Kupplungsbolzens (8) einen größeren Querschnitt aufweist als der am Ende desselben angeordnete Wulst (12).

5.) Schnappkupplung nach einem der Ansprüche 1 bis 4, dadurch gekennzeichnet, daß die im Werkzeugträger (5) angeordnete Ausnehmung (11) und der in diese einrastende Ansatz (10) des Kupplungsbolzens (8) einen von der Kreisform abweichenden Querschnitt aufweisen und z. B. sechskantig ausgebildet sind.

6.) Schnappkupplung nach einem der Ansprüche 1 bis 5, dadurch gekennzeichnet, daß der bzw. mehrere Kupplungsbolzen (8) mit dem Werkzeug (7) einstückig gefertigt ist (sind) und aus einem Kunststoffpreßteil bestehen.

1/1     0124776

FIG.1

FIG. 2       FIG. 5

FIG.3

FIG. 4

### Europäisches Patentamt

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | DE-U-1 809 348 (VON HORNSTEIN) * Figur 3 * | 1 | F 16 B 17/00 |
| Y | | 2,3 | |
| X | DE-U-1 971 275 (SIMON) * Figur 4 * | 1 | |
| Y | | 2,3 | |
| A | | 5 | |
| X | DE-U-1 997 946 (TELEFONBAU UND NORMALZEIT) * Figur 1 * | 1 | |
| Y | | 2-4 | RECHERCHIERTE SACHGEBIETE (Int. Cl. 3) F 16 B 2/00 F 16 B 5/00 |
| X | DE-U-6 752 280 (PRYM-WERKE) * Figur 2 * | 1 | F 16 B 17/00 A 61 H 23/02 |
| Y | | 2-4 | |
| X | DE-U-7 235 526 (SIEMENS) * Figur 1 * | 1 | |
| Y | | 2,3 | |

-/-

Der vorliegende Recherchenbericht wurde für alle Patentansprüche erstellt.

| Recherchenort BERLIN | Abschlußdatum der Recherche 26-06-1984 | Prüfer ZAPP E |
|---|---|---|

**Europäisches Patentamt**

**EUROPÄISCHER RECHERCHENBERICHT**

EP 84 10 3769

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-U-8 002 922 (KOLB) <br> * FIgur 2 * | 1 | |
| Y | | 3,4 | |
| | --- | | |
| X | GB-A-1 109 793 (ITW) <br> * Figur 1 * | 1 | |
| Y | | 2-4 | |
| | --- | | |
| X | GB-A-1 234 965 (GOBLIN DAUDE) <br> * Figur 2 * | 1 | |
| Y | | 2-4 | |
| | --- | | RECHERCHIERTE SACHGEBIETE (Int. Cl. ³) |
| A | EP-A-0 001 833 (METRONIC ELEKTRO) | | |
| | ----- | | |

Der vorliegende Recherchenbericht wurde für alle Patentansprüche erstellt.

| Recherchepqrt <br> BERLIN | Abschlußdatum der Recherche <br> 26-06-1984 | ZAPP E | Prüfer |
|---|---|---|---|